# EUROPEAN PATENT APPLICATION

(11) **EP 4 086 095 A1**
(43) Date of publication of application: **09.11.2022**
(21) Application number: 21172669.0
(22) Date of filing: 07.05.2021
(51) Int. Cl.: B60H 1/00, F24F 13/02, B29C 51/00, F16L 9/00

(54) **AIR DUCT DEVICE WITH COUPLING SECTION AND METHOD FOR MANUFACTURING AN AIR DUCT DEVICE**

(71) Applicant: Trocellen GmbH, 53840 Troisdorf (DE)
(72) Inventor: GRUND, Andreas, 50321 Brühl (DE); HAGEDORN, Andreas, 51491 Overath (DE); OTTO, Horst, 53117 Bonn (DE)
(74) Representative: Horn Kleimann Waitzhofer Patentanwälte PartG mbB

(57) **Abstract**

An air duct device (1) at least partially made of a polyolefin-foam material, comprising a duct section (2) having a longitudinal extension (4) and at least one opening (5), and a coupling section (3) attached to the duct section (2), wherein the coupling section (3) encloses the opening (5) and is implemented to mechanically couple to a stationary counterpart, the coupling section (3) and the duct section (2) are at least partially made of at least one thermoformed sheet (16) of the polyolefin-foam material and comprise a flanged seam (7) along the longitudinal extension (4), the coupling section (3) comprises a coating material (8) applied to the thermoformed sheet (16), and the coating material (8) has a higher rigidity and/or hardness than the polyolefin-foam material.

## Description

The present disclosure relates to air duct devices that are suitable to couple with external counterparts, such as flanges or adapters. Further methods for producing air duct devices having specific coupling sections are disclosed.

Air ducts are used in the automotive field, for instance, to guide air streams in an HVAC (Heating, Ventilation and Air Conditioning) environment. Some air ducts are produced from sheets of thermoplastic foam materials that are relatively soft and light. In order to couple those air ducts with stationary elements, for example at a car's dashboard, conventionally, coupling adaptors or rigid frames are glued or molded to the end portions of foam-based air ducts. Such frames mostly form the opening of the duct. Thus, due to the relatively soft materials, the coupling sections need to be reinforced in some way, as for example, by additional plastic parts.

JP2017083069A discloses air ducts for air humidifiers having heat insulting properties. The air ducts are made of a polyolefin-foam and comprise a hardened outside layer of the cured foam as a joint portion. The hardened or cured layer is obtained by melting the foam for generating a smaller foaming ratio than that of the duct main body.

US 2014/0283941 A1 discloses a seamless self-insulated foam duct made from a single continuous homogenous member of polymeric foam. Densified foam layers are provided as air barriers, and protective coatings against water or fire may be wrapped around the duct. According to US 2014/0283941 A1 the seamless foam duct is formed by drilling into a block of foam and treating the foam with a heated probe.

CN2392971Y discloses a pipe body made of a polyethylene foam having a protective metal layer.

DE 198 07 411 B4 discloses an air duct manufactured of a foam material in a twin-sheet process. The air duct comprises a separate flange or adapter piece that is glued or welded to an end of the air duct. The adapter piece is made of polypropylene or polyethylene and provides for a better rigidity and handling when coupling the duct to other elements.

It is desirable to reduce the effort in providing coupling means to air ducts that are, for example, produced with polyolefin foams. It is therefore an object of the present invention to provide improved air duct devices with a coupling section and methods for manufacturing those.

Accordingly, air duct devices and methods for producing such are provided having the features of the independent claims.

Embodiments of an air duct device, which is at least partially made of a polyolefin-foam material comprise: a duct section having a longitudinal extension, at least one opening, and a coupling section attached to the duct section. The coupling section encloses the opening and is implemented to mechanically couple to a, e.g. stationary, counterpart. The coupling section and the duct section are at least partially made of at least one thermoformed sheet of the polyolefin-foam material and comprise a flanged seam along the longitudinal extension. The coupling section comprises a coating material applied to the thermoformed sheet, wherein the cured coating material has a higher rigidity and/or hardness than the polyolefin-foam material.

It is an advantage of the disclosed air duct device that its robustness and stability at the coupling section as an interface towards a stationary counterpart is increased by a coating that may provide a higher rigidity than the polyolefin material itself.

For example, the interface between the duct section and the stationary counterpart is realized by the coupling section. The air duct device is easy to manufacture because the coating material can be applied after the thermoformed sheet is realized, and thus, the general duct form and geometry is already set. Coatings can be applied to a variety of geometries, such as edges, corners, angles nooks, or undercuts along the contour of the opening of the duct. The disclosed means for increasing the coupling section's rigidity and robustness in terms of a coating allows for flexible interface geometries.

Preferably, the air duct device does not require additional separate pieces like adaptors or rigid coupling pieces that need to accurately match the interface geometry.

In embodiments, the duct device further comprises a frame and/or adapter piece for reinforcing the coupling section. Due to the coating the frame and/or adapter can be lighter than conventionally. Hence, the total weight of the duct device can be decreased.

In embodiments, the coating material is applied to the thermoformed sheet material or its surface by dipping, spraying or painting an uncured coating material.

Investigations of the applicant show that spray coating yields advantageously smooth surfaces and rigid coating qualities.

In embodiments, the coating material is at least one of a solvent-free water-based varnish, a solvent-based varnish, a lacquer suitable to be applied by dipping, by spraying, by printing, and/or by painting, or a two-component lacquer.

In embodiments the coating is a reinforcement coating to increase the rigidity of the coupling section. The coating material is preferably in a liquid form prior to its application to the thermoformed sheet at the opening position. In embodiments, the coating includes additives increasing the robustness against mechanical wear, e.g. fibers or particles.

One may contemplate of combinations of a polyolefin-foam material and suitable coating materials, for example polyethylene or polypropylene foams and acrylic varnishes.

The reinforcement coating of the coupling section can be easily applied to outwardly protruding fins or edges of the flanged seam close to the opening. In comparison to separate adapter pieces stabilizing the opening, a rigid coating may be applied to a variety of irregular contours.

Generally, an outward finned and flanged seam of a duct having a tube-like structure may limit the handling and further processing of the duct. The couplings section having a rigid coating addresses this aspect.

It is an advantage that the means for reinforcing the coupling section (coating layer/s) hardly decreases the inner cross-section of the opening acting as an inlet or outlet of the air duct in comparison to separate fixtures. Further, the reinforcement coating allows to implement the coupling section as a female part, whereas the stationary counterpart may be a male coupling part.

In embodiments, the coating is applied both, to the duct section and to the coupling section. One may contemplate to coat the entire duct device with the rigid coating material. The coating can be applied prior to or after a thermoforming process. In embodiments the coating is applied to both sides of the polyolefin-foam sheet material.

In embodiments, the coating has a thickness between 20 µm and 2 mm, preferably between 50 µm and 1 mm. The coating may have several layers, each having a thickness between 20 µm and 1 mm.

In embodiments, the coating is implemented to limit the effect of radial forces on the ridge of the opening. E.g. a radial deformation or strain of the circumference of the coupling section due to tear is reduced by the coating's rigidity as compared to a deformation of the bare thermoformed polyolefin-sheet material.

In embodiments the coating is a continuous coating along the circumference of the coupling section and/or opening.

In embodiments, the duct section has a wall thickness between 1 mm and 15 mm, preferably between 2 mm and 5 mm. One may contemplate of several layers of polyolefin-foam material or additional layers, for example comprising non-woven or woven materials. In embodiments, the thermal polyolefin-foam materials have a gross density between 30 and 150 kg/m³, preferably between 60 and 100 kg/m³, according to DIN EN ISO 845 valid at the time of filing this disclosure. The wall thickness may vary depending on the molding process and form.

Preferably, the polyolefin-foam material is temperature-resistant until 100°C, and more preferably until 120°C. In embodiments, the polyolefin-foam material is produced according to the method disclosed in EP 0 445 592 B1, and embodiments of a hollow body and/or duct device to be coated with the coating material may be manufactured according to EP 1 521 675 B1. Both disclosures are hereby incorporated by reference. The coating material is chosen so as to adhere to the used polyolefin-foam material.

The air duct device may have an irregular shape and an irregular contour or cross-section at the opening. The opening may be an inlet or an outlet of the duct. The duct device may comprise a plurality of openings, e.g. two: one inlet and one outlet, wherein the outlet preferably includes the coupling section. In embodiments of the air duct device, its cross-section perpendicular to the longitudinal extension changes along a flow path of the air within the duct device. Preferably, the coating material is different from the foam material.

In embodiments, the coupling section comprises an edge, ridge and/or rim of the duct section and its width is defined by the extension of the coating in the longitudinal direction away from the opening. The coating can be applied in the interior surface of the duct device and may extend thereon around the edge, ridge and/or rim of the coupling section.

In embodiments, the coating extends at least partially into the interior of the duct section. By applying the coating material in the interior and the exterior surfaces of the coupling section, the rigidity and therefore robustness of the coupling section with a stationary counterpart is increased.

The coupling section and/or the stationary counterpart may comprise a socket, a fitting, a snap fit, port and neck flange and/or a ledge. In embodiments, the coupling section is implemented as a male part to couple with a stationary female counterpart. However, one may contemplate other fittings.

Further, a method for manufacturing an air duct device is disclosed. The method includes at least one of the steps:
providing a duct having a longitudinal extension and at least one predetermined position for an opening, wherein the duct is at least partially made of at least one thermoformed sheet of a polyolefin-foam material;
applying a coating material to the thermoformed sheet such that the applied coating material covers the thermoformed sheet at the opening thereby forming a coupling section.

According to an alternative aspect of the method, at least one of the steps is carried out:
providing at least one sheet of a polyolefin-foam material suitable for being thermoformed into a duct having a longitudinal extension and at least one predetermined position for an opening;
applying a coating material to the sheet such that the applied coating material covers the thermoformed sheet at the position for the opening thereby forming a coupling section; and
thermoforming the coated sheet into the duct having a longitudinal extension and the at least one opening.

The cured coating material has preferably a higher rigidity than the polyolefin-foam material.

The step of applying may include the steps of spraying, painting or printing the coating material onto a surface region of the thermoformed sheet.

The method may further comprise the step of cutting the opening into the thermoformed sheet of the duct at the predetermined position. Cutting the opening may be done prior to applying the coating material or afterwards. If the coating is applied afterwards, also the interior of the duct can be coated.

One may also contemplate cutting the opening into the thermoformed sheet after applying the coating material and curing it.

Embodiments of the method may comprise at least one of the steps of:
carrying out a twin-sheet thermoforming process for forming a hollow body made of two sheets of a polyolefin-foam material, wherein the hollow body has a longitudinal extension;
cutting an opening into the hollow body, in particular perpendicular to the longitudinal extension, the opening having an edge, ridge and/or rim; and/or
trimming a flanged seam along the longitudinal extension of the hollow body.

In a twin-sheet process a circumferential seam and eventually two flanged seams occur along the longitudinal extension of the duct device. Known twin-sheet thermoforming methods can be applied. As a result of the twin-sheet thermoformed process and the cutting of one or more openings, a tube-like duct is obtained. In order to stabilize and improve the rigidity of the opening sections, a coating is applied. Thus, a respective coupling section is obtained.

In embodiments of the method, the step of applying the coating material includes dipping the duct into a liquid coating material such that the coating material covers the thermoformed sheet at the opening.

Applying a liquid lacquer or varnish as coating by dipping does not require additional utensils or equipment and leads to a homogeneous coating with a well-defined border.

The method may further comprise the step of curing the coating material. The steps of applying the coating material and curing the coating material may be applied several times in order to obtain several coating layers.

In embodiments, the polyolefin-foam material, for example a polyethylene or polypropylene foam, has a predetermined temperature resistance. Applying and curing the coating material is then carried out below the temperature resistance of the polyolefin-foam material. Hence, preferably the polyolefin-foam material or the thermoformed sheet is not changed or affected by the application of the coating material.

The embodiments and features described with reference to the duct device and its materials apply mutatis mutandis to the method for manufacturing a duct device.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a first embodiment of an air duct having a coupling section;
- Fig. 2: shows a view onto the opening edge of air duct embodiments for illustrating embodiments for coupling sections;
- Fig. 3: shows cross sectional views of embodiments for coupling sections;
- Fig. 4: shows a cross sectional view of a further embodiment for a coupling section together with an embodiment for a counterpart; and
- Fig. 5: shows exemplary method steps involved in embodiments for manufacturing methods for an air duct device.

In the Figures, like reference numerals designate like or functionally equivalent elements, unless otherwise indicated.

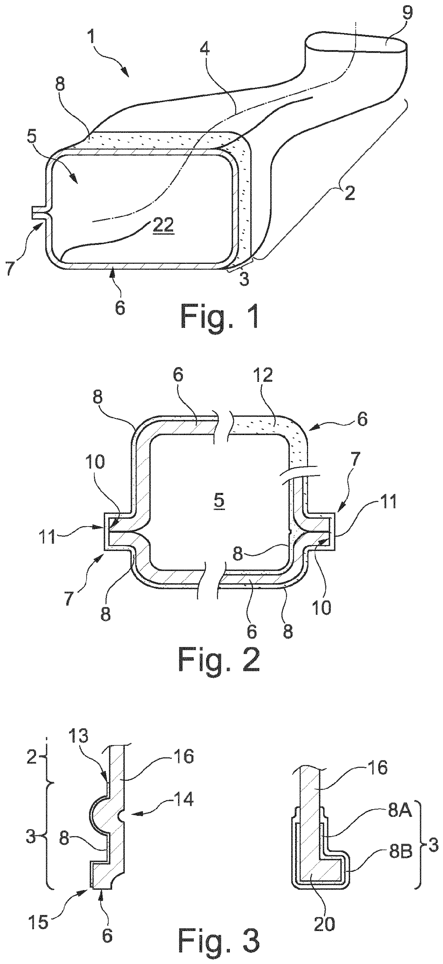

Fig. 1 shows a first embodiment of an air duct device having a coupling section. The air duct device 1 extends along a longitudinal direction 4 and has a tube-like shape. In Fig. 1, the air duct 1 has a duct section 2 for guiding air to or from a one opening 5 and another opening 9. The first opening 5 is an air outlet to couple with a stationary coupling piece (not shown), and the second opening 9 is an inlet for receiving air from an HVAC system in a car. The first opening 5 is provided with a coupling section 3 that is suitable to couple to said stationary counterpart, for example a flange or coupler in a dashboard of a car.

The walls of the air duct device 1 are formed by a thermoformed polyolefin-sheet, for example using a cross-linked polyethylene foam. In the orientation of Fig. 1 on the left-hand side, a flanged seam 7 can be seen that results from welding the outward finned and flanged seam of the polyethylene sheet.

The cross-section of the opening 5 resembles a rectangle with rounded corners. The cross-section of the air duct 1 changes along the longitudinal direction 4 according to the spatial requirements in the car. The longitudinal direction or extension 4 generally corresponds to the air flow direction within the air duct 1.

The coupling section 3 is directly attached to the duct section 2 and encloses the openings 5. The coupling section 3 is realized by coating the polyolefin-foam material with a more rigid coating material 8. This is indicated by a dotted area 8 in Fig. 1. The coupling section 3 extends from the edge or ridge 6 of the opening 5 along the longitudinal direction 4 towards the duct section 2. The width of the coupling section 3 may be adapted according to the requirements of a counterpart. The coupling section 3 provides for an interface with a stationary counterpart wherein the fitting geometries correspond to each other.

An increased rigidity and stability of the foam material at the openings edge 6 is realized by the coating material, for example a varnish or lacquer having a specified hardness or rigidity after being cured. In particular, the cured coating has a thickness and mechanical properties that allow to dispense with additional adapters, support frames or pieces to couple with stationary counterparts.

Investigations of the applicant show that, in particular, applying the coating by a dipping technique results in a decrease of the production effort. Mostly, air ducts in the automotive field are produced by thermoforming and/or twin-sheet methods. This results in an outward flanged seam 7 that conventionally needs to be matched with a rigid plastic counterpart, or an additional adapter or frame is needed. By applying a coating, the rigidity, in particular, at the seamed edges is improved.

Fig. 2 shows a view onto the opening edge of an air duct in several embodiments. Fig. 2 generally depicts three sections: a left, upper-right and lower-right section illustrates embodiments of coupling sections. For example, the embodiment of an air duct is manufactured using a twin-sheet thermoformed process. Hence, two sheets are placed in a mold and heated up to processing temperature. Supported by a vacuum, the sheets are formed as half-shells and welded together resulting in the outwardly finned and flanged seam 7. A hollow body is obtained and openings 5 are cut.

Fig. 2 shows different configurations of coatings. The view onto the opening edge shows the exterior coating 8 (left-hand side of Fig. 2), covering the edge 10 of the flanged seam 7 (lateral coating section 11). Using a liquid coating material 8 for increasing the rigidity of the interface towards an external or stationary counterpart allows to cover the border of the opening 5 with the rigid cured coating material in a continuous fashion along the circumference of the opening and/or coupling section. In particular, irregular shapes that may occur at the edge 10 of the flange seam 7 are easily covered by a lateral flange coating 11.

In other embodiments shown in Fig. 2 (lower right), the coating is applied in the interior and the exterior of the coupling section. However, the edge 6 of the opening 5 is free from the coating. This can be obtained by spraying, panting or printing the coating material on the inner and outer surfaces of the polyolefin sheet. The coating 8 can also be applied prior to cutting the opening into the hollow structure or body obtained from a twin-sheet process which may result in a coating configuration shown in the left section of Fig. 2.

The upper right section in Fig. 2 shows an edge coating 12 that can be obtained by dipping the edge 6 of the already cut-out opening in a hollow body made of thermoformed polyolefin-sheets into the coating material. In a dipping process, a duct, e.g. manufactured by a twin-sheet process, is dipped into a liquid lacquer thereby covering the edge of the opening and sections of the and inner and outer surfaces of the coupling section.

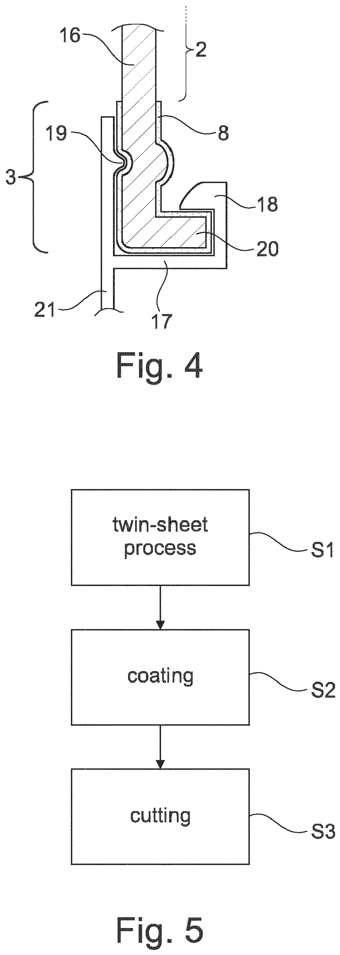

Fig. 3 shows cross-sectional views of embodiments for coupling sections. In Fig. 3. a cross section along the longitudinal direction is shown, and hence a profile of the duct wall 16 at the respective coupling section 3 is shown. On the left-hand side, the coupling section 3 is defined by the outer coating 8 that covers, from top to bottom, a coupling ridge 14 that extends outward from the tube-like duct towards the opening edge 6. In Fig. 3 left, a coating boundary 13 is indicated that separates the duct section 2 from the coupling section 3. The coating 8, for example a rigid or hard varnish, allows to couple the coupling section 3 with an external counterpart as shown in Fig. 4 in the following.

Fig. 3 shows on the right-hand side an alternative version of a coupling section 3. The thermoformed polyolefin-sheet 16 has a coupling flange 20 facing away from the opening. The coupling section 3 comprises a first inner coating 8A and a second outer coating 8B. By applying several coating layers 8A, 8B, the robustness of the coupling section 3 can be improved. One may contemplate of using different lacquers or varnishes for the various layers 8A and 8B. However, one may also repeatedly apply a coating layer having the same recipe.

Fig. 4 shows a cross-sectional view of a further embodiment for a coupling section together with an embodiment for a counterpart. In the orientation of Fig. 4, the longitudinal direction extends from top to bottom, and the opening (not shown) of the air duct device faces downwards. The coupling section 3 is attached to the duct section 2 wherein both are formed by a thermoformed polyolefin-sheet 16. At the lower edge of the polyolefin-sheet 16, a flange 20 is formed and is attached to a flange section 17 of the counterpart or stationary adapter 21. The counterpart 21 comprises an interlocking snap arm 18 that holds the coupling flange 20 pressed against the flange section 17. In order to, for example, ensure airtightness, an outwardly facing rib 19 of the counterpart 21 fits into a corresponding groove in the coupling section 3. The groove can be arranged circumferentially around the opening. In the embodiment shown in Fig. 4, the coating 8 surrounds the inner and outer surfaces of the coupling section 3.

Turning to Fig. 5, method steps involved in a thermoforming manufacturing process for embodiments of the air duct device disclosed herein are shown. After forming a hollow body of polyolefin-foam sheets welded together along an outwardly extending flanged seam (step S1), a mechanically reinforcement coating is applied (step S2) and openings (see e.g. 9, 5 and Fig. 1) are cut, for example by blades (see step S3). The openings are cut through the flanged seam so that usually two seams run along the longitudinal extension of the duct.

More specifically, in the first step S1 of Fig. 5, a twin-sheet process is performed to obtain the hollow body formed by two thermoformed polyolefin-sheets that are welded together along a circumferential seam. The seam is an outward finned and flanged seam that is welded together.

In one embodiment of the production method, the coating is externally applied, for example in a dipping process, where the opening of the air duct is intended. Next, in step S3, the opening is cut out of the hollow body, thus generating an interface for coupling with an external counterpart.

Alternatively, the cutting step S3 can be performed prior to the coating step S2. One can contemplate of additional process steps, as, for example, adding additional layers of materials other than thermoformed polyolefin-foams or cutting several openings in order to obtain a channel or tube-like air duct. The coating step may be repeatedly performed. Embodiments may encompass a first coating step for generating a first outside coating layer, the cutting step, and a second coating step to obtain an inner coating layer and edge layer as well as an outer double layer.

In alternative production methods, the coating can be applied to a flat polyolefin-foam sheet material prior to a thermoforming step.

Generally, the disclosed methods for producing and embodiments of air duct devices require a reduced effort in the production process because one may dispense with the attachment of stabilizing frames or adapter pieces that need to be glued or attached to the duct opening. At least, using the reinforcement coating may result in lighter frames or adapter pieces thereby reducing the total weight of an air duct.

In some applications the coating may replace such conventionally used frames or supportive rigid elements. Dispensing with rigid frames made of plastic materials reduces the complexity in terms of materials used and may potentially reduce the weight of an air duct. In particular, the air ducts disclosed are used in the automotive field, where a weight reduction is highly desirable.

### REFERENCE NUMERALS

- 1: air duct device
- 2: duct section
- 3: coupling section
- 4: longitudinal extension
- 5, 9: opening
- 6: edge
- 7: flanged seam
- 8, 8A, 8B: coating
- 10: edge of flanged seam
- 11: lateral flange coating
- 12: edge coating
- 13: coating boundary
- 14: coupling ridge
- 15: coupling flange
- 16: thermoformed polyolefin sheet
- 17: flange section
- 18: snap arm
- 19: rib
- 20: coupling flange
- 21: counterpart
- 22: interior

## Claims

1. An air duct device (1) at least partially made of a polyolefin-foam material comprising:
a duct section (2) having a longitudinal extension (4) and at least one opening (5), and
a coupling section (3) attached to the duct section (2),
wherein:
the coupling section (3) encloses the opening (5) and is implemented to mechanically couple to a corresponding counterpart (21);
the coupling section (3) and the duct section (2) are at least partially made of at least one thermoformed sheet (16) of the polyolefin-foam material and comprise a flanged seam (7) along the longitudinal extension (4);
the coupling section (3) comprises a coating material (8) applied to the thermoformed sheet (16), wherein the cured coating material (8) has a higher rigidity and/or hardness than the polyolefin-foam material.

2. The air duct device of claim 1, wherein the coating material (8) is at least one of a solvent-free water-based varnish, a solvent-based varnish, a lacquer suitable to be applied by dipping, by spraying, by printing, and/or by painting, a two-component lacquer.

3. The air duct device of claim 1 or 2, wherein the coating (11) covers outwardly protruding edges (10) of the flanged seam (7) at the opening.

4. The air duct device of any one of claims 1 - 3, wherein the coating (8) has a thickness between 20 µm and 1 mm, and the duct section has a wall thickness between 1,0 mm and 5 mm.

5. The air duct device of any one of claims 1 - 4, wherein the coupling section (3) comprises an edge (6), ridge (14) and/or rim of the duct section (2).

6. The air duct device of claim 5, wherein the coating (8) extends around the edge, ridge and/or rim of the coupling section (3) and, in particular, covers the interior (22) of the coupling section (3) and/or at least partially the interior (22) of the duct section (2).

7. The air duct device of any one of claims 1 - 6, wherein the duct section (2) is free from the coating.

8. The air duct device of any one of claims 1 - 7, wherein the coupling section (3) and/or the stationary counterpart (21) comprises a socket, a fitting, a snap-fit (18), a port, a neck (19), a flange (20) and/or a latch.

9. The air duct device of any one of claims 1 - 8, wherein the coupling section (3) comprises plurality of coatings (8A, 8B) for increasing a rigidity or stability of the coupling section (3).

10. A method for manufacturing an air duct device (1), in particular an air duct device of any one of claims 1 - 9, comprising:
providing (S1) a duct having a longitudinal extension (1) and at least one predetermined position for an opening (5), wherein the duct is at least partially made of at least one thermoformed sheet (16) of a polyolefin-foam material;
applying (S2) a coating material (8) to the thermoformed sheet (16) such that the applied coating material (8) covers the thermoformed sheet (16) at the opening thereby forming a coupling section (3), wherein the cured coating material (8) has a higher rigidity than the polyolefin-foam material.

11. The method of claim 10, further comprising:
cutting (S3) the opening into the thermoformed sheet (16) of the duct at the predetermined position.

12. The method of claim 10 or 11, wherein the step of applying (S2) the coating material includes at least one of the steps of:
dipping the duct into a liquid coating material such that the coating material covers the thermoformed sheet (16) at the opening; and
curing the coating material.

13. The method of any one of claims 10 - 12, wherein the step of providing the duct includes at least one of the steps of:
carrying out a twin-sheet thermoforming process (S1) for forming a hollow body made of two sheets of a polyolefin-foam material (16), the hollow body having a longitudinal extension (4);
cutting an opening (5) into the hollow body, in particular across the longitudinal extension (4), the opening having an edge, ridge and/or rim;
trimming a flanged seam (7) along the longitudinal extension of the hollow body.

14. The method of any one of claims 10 - 13, wherein the step of applying (S2) the coating material includes at least one of the steps of:
spraying the coating material onto the thermoformed sheet;
painting the coating material onto the thermoformed sheet; and/or
printing the coating material onto the thermoformed sheet.

15. The method of any one of claims 10 - 14, wherein the polyolefin-foam material has a predetermined temperature resistance, and applying and curing the coating material is carried out below the temperature resistance.
